# EUROPÄISCHE PATENTSCHRIFT

(11) **EP 1 694 753 B1**
(45) Veröffentlichungstag und Bekanntmachung des Hinweises auf die Patenterteilung: **31.03.2010**
(21) Anmeldenummer: 04803716.2
(22) Anmeldetag: 10.12.2004
(51) Int. Cl.: C08J 9/00, C08J 9/14, C08J 9/232

(54) **VERFAHREN ZUR HERSTELLUNG VON EXPANDIERBAREN STYROLPOLYMERMISCHUNGEN**
METHOD OF PRODUCING EXPANDABLE POLYSTYRENE MIXTURES
PROCEDE DE PRODUCTION DE MELANGES DE POLYSTYRÈNE EXPANSIBLE

(30) Priorität: 12.12.2003 DE 10358801
(43) Veröffentlichungstag der Anmeldung: 30.08.2006
(73) Patentinhaber: BASF SE, 67056 Ludwigshafen (DE)
(72) Erfinder: HAHN, Klaus, 67281 Kirchheim (DE); EHRMANN, Gerd, 67146 Deidesheim (DE); RUCH, Joachim, 67157 Wachenheim (DE); ALLMENDINGER, Markus, 67149 Meckenheim (DE); SCHMIED, Bernhard, 67227 Frankenthal (DE); HOLOCH, Jan, 69181 Leimen (DE); MÜHLBACH, Klaus, 67269 Grünstadt (DE); RIETHUES, Michael, 67071 Ludwigshafen (DE)
(86) Internationale Anmeldenummer: PCT/EP2004/014066
(87) Internationale Veröffentlichungsnummer: WO 2005/056652

(56) Entgegenhaltungen:
- EP-A- 0 425 973
- EP-A- 0 682 077
- WO-A-00/43442
- US-A1- 2003 162 852

## Beschreibung

Die Erfindung betrifft ein Verfahren zur Herstellung von expandierbaren thermoplastischen Polymergranulaten umfassend die Schritte
a) Herstellen einer Mischung aus
   50 bis 90 Gew.-% Polystyrol B), ausgewählt aus radikalisch polymerisiertem, glasklarem Polystyrol (GPPS) oder anionisch polymerisiertem Polystyrol (A-PS), und
   10 bis 50 Gew.-% Styrolcopolymer A), ausgewählt aus Styrol-Butadien-Blockcopolymer, Styrol-α-Methylstyrol-copolymer, Acrylnitril-Butadien-Styrol (ABS), Styrol-Acrylnitril (SAN), Acrylnitril-Styrol-Acrylester (ASA), Methyacrylat-Butadien-Styrol (MBS), Methylmethacrylat-Acrylnitril-Butadien-Styrol (MABS)-polymerisate,
b) Einmischen eines organischen Treibmittels in die Polymerschmelze mittels statischen oder dynamischen Mischer bei einer Temperatur von mindestens 150°C,
c) Kühlen der treibmittelhaltigen Polymerschmelze auf eine Temperatur von mindestens 120°C,
d) Austrag durch eine Düsenplatte mit Bohrungen, deren Durchmesser am Düsenaustritt höchstens 1,5 mm beträgt und
e) Granulieren der treibmittelhaltigen Schmelze direkt hinter der Düsenplatte unter Wasser bei einem Druck im Bereich von 1 bis 20 bar.

Verfahren zur Herstellung von expandierbaren Styrolpolymeren, wie expandierbarem Polystyrol (EPS) durch Suspensionspolymerisation ist seit langem bekannt Diese Verfahren haben den Nachteil, dass große Mengen Abwasser anfallen und entsorgt werden müssen. Die Polymerisate müssen getrocknet werden um Innenwasser zu entfernen. Außerdem führt die Suspensionspolymerisation in der Regel zu breiten Perlgrößenverteilungen, die aufwändig in verschiedene Perlfraktionen gesiebt werden müssen.

Weiterhin können expandierte und expandierbare Styrolpolymerisate mittels Extrusionsverfahren hergestellt werden. Hierbei wird das Treibmittel z.B. über einen Extruder in die Polymerschmelze eingemischt, durch eine Düsenplatte gefördert und zu Partikeln oder Strängen granuliert (US 3,817,669, GB 1,062,307, EP-B 0 126 459, US 5,000,891).

Die EP-A 668 139 beschreibt ein Verfahren zur wirtschaftlichen Herstellung von expandierbarem Polystyrolgranulat (EPS) wobei die treibmittelhaltige Schmelze mittels statischer Mischelemente in einer Dispergier-, Halte- und Abkühlstufe hergestellt und anschließend granuliert wird. Aufgrund der Abkühlung der Schmelze auf wenige Grad über der Erstarrungstemperatur ist die Abführung hoher Wärmemengen notwendig.

Um das Aufschäumen nach der Extrusion weitgehend zu verhindern, wurden verschiedene Verfahren für die Granulierung, wie Unterwassergranulierung (EP-A 305 862), Sprühnebel (WO 03/053651) oder Zerstäubung (US 6,093,750) vorgeschlagen.

Die WO 98/51735 beschreibt Graphitpartikel enthaltende expandierbare Styrolpolymere mit verringerter Wärmeleitfähigkeit, die durch Suspensionspolymerisation oder durch Extrusion in einem Zweischneckentextruder erhältlich sind. Aufgrund der hohen Scherkräfte in einem Zweischneckentextruder beobachtet man in der Regel einen signifikanten Molekulargewichtsabbau des eingesetzten Polymeren und/oder teilweise Zersetzung von zugegebenen Additiven, wie Flammschutzmittel.

Zur Erzielung optimaler Dämmeigenschaften und guter Oberflächen der Schaumstoffkörper ist die Zellzahl und Schaumstruktur, die sich beim Verschäumen der expandierbaren Styrolpolymeren (EPS) einstellt, von entscheidender Bedeutung. Die durch Extrusion hergestellten EPS-Granulaten lassen sich häufig nicht zu Schaumstoffen mit optimaler Schaumstruktur verschäumen.

Expandierbare, kautschukmodifizierte Styrolpolymerisate für elastische Polystyrolschäume sind beispielsweise beschrieben in WO 94/25516, EP-A 682 077, DE-A 97 10 442 und EP-A 0 872 513.

Aufgabe der vorliegenden Erfindung war es, ein Verfahren zur Herstellung von expandierbaren thermoplastischen Polymergranulaten bereitzustellen, die auch in bestehenden EPS-Verarbeitungsanlagen zu überwiegend geschlossenzelligen Schaumstoffpartikeln vorschäumbar und zu Partikelschaumformkörpern mit einer Dichte im Bereich von 10 bis 100 g/l verschweißbar sind.

Demgemäss wurde das oben beschriebene Verfahren gefunden. Partikelschaumformkörper mit einer Dichte im Bereich von 8 bis 100 g/l, bevorzugt im Bereich von 15 bis 50 g/l sind erhältlich durch Verschweißen von vorgeschäumten Schaumpartikeln aus expandierbaren, thermoplastischen Polymergranulaten, die nach dem erfindungsgemäßen Verfahren erhalten werden.

Die Partikelschaumformteile weisen eine hohe Gesschlossenzelligkeit auf, wobei in der Regel mehr als 60%, bevorzugt mehr als 70 %, besonders bevorzugt mehr als 80 % der Zellen der einzelnen Schaumpartikel geschlossenzellig sind.

Besonders bevorzugt enthält das thermoplastische Polymergranulat
50 bis 90 Gew.-% Polystyrol B) und
10 bis 50 Gew.-% Styrolcopolymer A).

Als Styrolcopolymere A) werden Styrol-Butadien-Blockcopolymere, Styrol-α-Methylstyrol-copolymer, Acrylnitril-Butadien-Styrol (ABS), Styrol-Acrylnitril (SAN), Acrylnitril-Styrol-Acrylester (ASA), Methyacrylat-Butadien-Styrol (MBS), Methylmethacrylat-Acrylnitril-Butadien-Styrol (MABS)- polymerisate eingesetzt.

Als Polystyrol B) wird radikalisch polymerisiertes glasklares Polystyrol (GPPS) oder anionisch polymerisiertes Polystyrol (A-PS) eingesetzt.

Die Zusammensetzung der Polymergranulate kann entsprechend den gewünschten Eigenschaften des Partikelschaumformkörpers gewählt werden. Styrol-Butadien-Blockcopolymere als Styrolcopolymerkomponente A) eignen sich insbesondere um die Elastizität und das Rückstellvermögen des Partikelschaumformkörpers zu verbessern. Mit Acrylnitril-haltigen Styrolcopolymeren, wie SAN und ABS kann die Ölbeständigkeit sowie die Lösungsmittelbeständigkeit, insbesondere gegenüber aromatischen Lösungsmitteln und die Wärmeformbeständigkeit verbessert werden.

Es hat sich gezeigt, dass Styrolpolymere mit Molekulargewichten M_{w} von unter 160.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekulargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3,5, besonders bevorzugt im Bereich von 1.5 bis 2,8 und ganz besonders bevorzugt im Bereich von 1,8 bis 2,6 aufweisen.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymerer (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolyermschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatirx eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze Additive, Keimbildner, Füllstoffe, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, niedermolekulare Styrolpolymere, Phthalate, die in Mengen von 0,05 bis 10 Gew.-%, bezogen auf das Styrolpolymerisat, eingesetzt werden können.

Zur erfindungsgemäßen Herstellung der expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvemebelung von Temperierflüssigkeiten oder Zerstäubungsgranulation in Betracht. Zur Durchführung des Verfahrens geeignete Apparateanordnungen sind z. B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis UD von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren, umfasst die Schritte
a) Polymerisation von Styrolmonomer und gegebenenfalls copolymersierbaren Monomeren, zu Styrolcopolymeren A) oder Polystyrol B),
b) Entgasungung der erhaltenen Styrolpolymerschmelze,
c) Mischen mit Styrolcopolymeren A) oder thermoplastischen Polymeren C),
d) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
e) Kühlen der treibmittelhaltigen Styrolpolymerschmelze auf eine Temperatur, die mindestens 120°C, bevorzugt 150 - 200°C beträgt,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimprägnierung in Stufe c) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmonomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen c) bis e) eingehalten. Besonders bevorzugt werden ausschließlich statische Mischer und statische Kühler im gesamten Verfahren eingesetzt. Die Polymerschmelze kann durch Druckpumpen, z. B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

Die expandierbaren, thermoplastischen Polymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form verschweißt werden.

### Beispiele:

### Einsatzstoffe:

| | |
|---|---|
| PS: | Glasklares Polystyrol (GPPS) mit einer Viskositätszahl VZ von 75 ml/g (M_{W} = 185.000 g/mol, Uneinheitlichkeit Mw/Mn = 2,6) der BASF Aktiengesellschaft |
| SAN 1 | Styrol-Acrylnitril-Copolymer (Luran® VLL 1970 der BASF Aktiengesellschaft) |
| SAN 2 | Styrol-Acrylnitril-Copolymer (Luran® VLS der BASF Aktiengesellschaft) |
| ABS 1 | Acrylnitril-Butadien-Styrol-Copolymer (Terluran GP 22 der BASF Aktiengesellschaft |
| ABS 2 | Acrylnitril-Butadien-Styrol-Copolymer (Terluran HI 10 der BASF Aktiengesellschaft |
| PP | Polypropylen (Novolen® HP 501 H) |
| SB 1 | sternförmiges Styrol-Butadien-Blockcopolymer (Styrolux® 3G55 der BASF Aktiengesellschaft) |
| SB2 | Styrol-Butadien-Blockcopolymer (Styrolux® 2G66 der BASF Aktiengesellschaft) |
| SB3 | Styrol-Butadien-Blockcopolymer (Styrolux® 684 D der BASF Aktiengesellschaft) |

Für die Beispiele wurde eine Schmelzemischung aus glasklarem Polystyrol und aus Polymeren, wie in unten stehender Tabelle angegeben, eingesetzt, in die zusätzlich 6 Gew.-% n-Pentan, bezogen auf die Schmelzemischung, eingemischt wurden. Die treibmittelhaltige Schmelzemischung wurde von ursprünglich 260 auf 200°C abgekühlt und bei einem Durchsatz von 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt. Der Pentangehalt im Granulat wurde direkt nach der Extrusion und nach 14-tägiger Lagerung im verschlossenen Polyethylenbeutel gemessen.

Diese Granulate wurden in strömendem Wasserdampf zu Schaumstoffperlen vorgeschäumt, 12 Stunden zwischengelagert und anschließend in gasdichten Formen mit Wasserdampf zu Schaumstoffkörpern verschweißt.

**Tabelle 1:**

| Beispiel | Zusammensetzung der Schmelzemischung [Gew.-%] | Pentangehalt [Gew.-%] | Pentangehalt 14d [Gew.-%] |
|---|---|---|---|
| 1 | PS/SB1 80/20 | 5,0 | 4,6 |
| 2 | PS/SB1 60/40 | 4,8 | 4,1 |
| 3 | PS/SB2 80/20 | 5,0 | 4,2 |
| 4 | PS/SB2 60/40 | 4,9 | 3,9 |
| 5 | PS/SB3 80/20 | 5.0 | 4,8 |
| 6 | PS/SB3 60/40 | 4,9 | 4,4 |
| 7 | PS/SAN 1 90/10 | 5,2 | 5,1 |
| 8 | PS/SAN 1 80/20 | 5,2 | 5,0 |
| 9* | PS/PP 90/10 | 5,0 | 4,5 |
| 10* | PS/PP 80/20 | 5,1 | 4,4 |

| | | | |
|---|---|---|---|
| * Die Beispiele 9-13 sind nicht erfindungsgemäß. | | | |

**Tabelle 2**

| Beispiel | Polymer | Schäumzeit [min] | Schaumdichte [g/l] |
|---|---|---|---|
| 11* | SAN 2 | 12 | 88 |
| 12* | ABS 1 | 8 | 55 |
| 13* | ABS 2 | 8 | 52 |

| | | | |
|---|---|---|---|
| * Die Beispiele 9-13 sind nicht erfindungsgemäß. | | | |

**Tabelle 3: Schäumverhalten der expandierbaren Polymergranulate der Beispiele 1,3,7- 10, (Schüttdichte [g/l])**

| Schäumzeit [sec] | B 1 | B 3 | B 7 | B 8 | B 9 | B 10 |
|---|---|---|---|---|---|---|
| 2 | | | 21,7 | 21,7 | | |
| 4 | 23,8 | | 14,7 | 15,2 | 19,2 | 50,0 |
| 6 | 22,7 | 45 | 16,7 | 16,7 | 17,2 | 45,5 |
| 8 | 21,7 | 40 | 19,2 | 19,2 | 16,7 | 50,0 |
| 10 | 22,7 | 36 | | | 19,2 | |
| 12 | | 45 | | | 21,7 | |
| 10 | | | | | | |

| | | | | | | |
|---|---|---|---|---|---|---|
| * Die Beispiele 9-13 sind nicht erfindungsgemäß. | | | | | | |

## Patentansprüche

1. Verfahren zur Herstellung von expandierbaren thermoplastischen Polymergranulaten umfassend die Schritte
a) Herstellen einer Mischung aus
50 bis 90 Gew.-% Polystyrol B), ausgewählt aus radikalisch polymerisiertem, glasklarem Polystyrol (GPPS) oder anionisch polymerisiertem Polystyrol (A-PS),
und
10 bis 50 Gew.-% Styrolcopolymer A), ausgewählt aus Styrol-Butadien-Blockcopolymer, Styrol-α-Methylstyrol-copolymer, Acrylnitril-Butadien-Styrol (ABS), Styrol-Acrylnitril (SAN), Acrylnitril-Styrol-Acrylester (ASA), Methyacrylat-Butadien-Styrol (MBS), Methylmethacrylat-Acrylnitril-Butadien-Styrol (MABS)-polymerisate,
b) Einmischen eines organischen Treibmittels in die Polymerschmelze mittels statischen oder dynamischen Mischer bei einer Temperatur von mindestens 150°C,
c) Kühlen der treibmittelhaltigen Polymerschmelze auf eine Temperatur von mindestens 120°C,
d) Austrag durch eine Düsenplatte mit Bohrungen, deren Durchmesser am Düsenaustritt höchstens 1,5 mm beträgt und
e) Granulieren der treibmittelhaltigen Schmelze direkt hinter der Düsenplatte unter Wasser bei einem Druck im Bereich von 1 bis 20 bar.

2. Verfahren nach Anspruch 1, **dadurch gekennzeichnet, dass** die expandierbaren, thermoplastischen Polymergranulate 3 bis 7 Gew.-% eines organischen Treibmittels enthalten.

3. Verfahren nach Anspruch 1 oder 2, **dadurch gekennzeichnet, dass** die treibmittelhaltige Polymerschmelze mit einer Temperatur im Bereich von 160 bis 240°C durch die Düsenplatte gefördert wird.

4. Verfahren nach einem der Ansprüche 1 bis 3, **dadurch gekennzeichnet, dass** die Düsenplatte auf einer Temperatur im Bereich von 20 bis 100°C über der Temperatur der treibmittelhaltigen Polymerschmelze liegt.

5. Verfahren nach einem der Ansprüche 1 bis 4, **dadurch gekennzeichnet, dass** der Durchmesser der Bohrungen der Düsenplatte am Düsenaustritt im Bereich von 0,3 bis 0,8 mm liegt.

## Claims

1. A process for preparing expandable, pelletized thermoplastic polymer materials, encompassing the steps of
a) preparing a mixture from
from 50 to 90% by weight of polystyrene B), selected from free-radical-polymerized glass-clear polystyrene (GPPS) or anionically polymerized polystyrene (APS),
and
from 10 to 50% by weight of styrene copolymer A), selected from styrene-butadiene block copolymer, styrene-α-methylstyrene copolymer, acrylonitrile-butadiene-styrene (ABS), styrene-acrylonitrile (SAN), acrylonitrile-styrene-acrylate (ASA), methacrylate-butadiene-styrene (MBS), and methyl methacrylate-acrylonitrile-butadiene-styrene (MABS) polymers,
b) using a static or dynamic mixer at a temperature of at least 150°C to incorporate an organic blowing agent into the polymer melt,
c) cooling the polymer melt comprising blowing agent to a temperature of at least 120°C,
d) discharge via a die plate with holes whose diameter at the discharge from the die is at most 1.5 mm, and
e) pelletizing the melt comprising blowing agent directly downstream of the die plate under water at a pressure in the range from 1 to 20 bar.

2. The process according to claim 1, wherein the expandable, pelletized thermoplastic polymer materials comprise from 3 to 7% by weight of an organic blowing agent.

3. The process according to claim 1 or 2, wherein the temperature of the polymer melt comprising blowing agent is in the range from 160 to 240°C when it is conveyed through the die plate.

4. The process according to any of claim 1 to 3, wherein the temperature of the die plate is in the range from 20 to 100°C above the temperature of the polymer melt comprising blowing agent.

5. The process according to any of claims 1 to 4, wherein the diameter of the holes in the die plate is in the range from 0.3 to 0.8 mm at the discharge from the die.

## Revendications

1. Procédé pour la production de granulés de polymères thermoplastiques expansibles, comprenant les étapes
a) préparation d'un mélange de
50 à 90 % en poids de polystyrène B), choisi parmi un polystyrène transparent polymérisé par voie radicalaire (GPPS) et un polystyrène polymérisé par voie anionique (A-PS), et
10 à 50 % en poids de copolymère de styrène A), choisi parmi un copolymère séquencé styrène-butadiène, un copolymère styrène- α-méthylstyrène, des produits de polymérisation acrylonitrile-butadiène-styrène (ABS), styrène-acrylonitrile (SAN), acrylonitrile/styrène/ester acrylique (ASA), acrylate de méthyle-butadiène-styrène (MBS), méthacrylate de méthyle-acrylonitrile-butadiène (MABS),
b) incorporation d'un agent d'expansion organique dans la masse fondue de polymères, au moyen de mélangeurs statiques ou dynamiques, à une température d'au moins 150 °C,
c) refroidissement de la masse fondue de polymères contenant un agent d'expansion, jusqu'à une température d'au moins 120°C,
d) décharge à travers un plaque de filière comportant des orifices sont le diamètre à la sortie de la filière est au maximum de 1,5 mm et
e) granulation de la masse fondue contenant un agent d'expansion, directement après la plaque de filière, sous l'eau, sous une pression dans la plage de 1 à 20 bars.

2. Procédé selon la revendication 1, **caractérisé en ce que** les granulés de polymères thermoplastiques expansibles contiennent de 3 à 7 % en poids d'un agent d'expansion organique.

3. Procédé selon la revendication 1 ou 2, **caractérisé en ce que** la masse fondue de polymère contenant un agent d'expansion est envoyée à travers la plaque de filière à une température dans la plage de 160 à 240°C.

4. Procédé selon l'une quelconque des revendications 1 à 3, **caractérisé en ce que** la plaque de filière se trouve à une température dans la plage de 20 à 100°C au-dessus de la température de la masse fondue de polymère contenant un agent d'expansion.

5. Procédé selon l'une quelconque des revendications 1 à 4, **caractérisé en ce que** le diamètre des orifices de la plaque de filière est dans la plage de 0,3 à 0,8 mm à la sortie de la filière.
